# EUROPEAN PATENT APPLICATION

(11) **EP 4 644 058 A1**
(43) Date of publication of application: **05.11.2025**
(21) Application number: 25173125.3
(22) Date of filing: 29.04.2025
(51) Int. Cl.: B25J 9/16, G05D 1/622, B25J 9/00

(54) **COMPACT ROBOT SAFETY DEVICE AND METHOD**

(30) Priority: 02.05.2024 NL 2037601
(71) Applicant: Heemskerk Innovative Technology B.V., 2629 HD Delft (NL)
(72) Inventor: Heemskerk, Cornelis Jacobus Maria, 2172 HZ Sassenheim (NL)
(74) Representative: Nederlandsch Octrooibureau

(57) **Abstract**

A compact safety device for a service robot, comprises a robot communication unit (76) configured to communicate with at least one controller of the service robot (41) and an emergency stop unit (77) configured to communicate with a power supply (45, 46). The robot communication unit (76) receives parameters from at least one first component (42, 43, 44, 47) of the service robot (41). If the set of parameters corresponds to the first safety condition, the robot communication unit (76) sends an instruction signal to stop moving at least part of the service robot or to reduce the speed of the at least part of the service robot. If the set of parameters corresponds to the second safety condition, control the emergency stop unit (77) disconnects at least one actuator (43, 44) of the service robot (41) from a power supply (46). The robot controller (42), the at least one first component (42, 43, 44, 47) of the service robot (41), the at least one second component (42, 43, 44) of the service robot (41), and the at least one actuator (43, 44) are external to the compact safety device.

## Description

### FIELD OF THE INVENTION

The invention relates to a safety device for a service robot. The invention further relates to a service robot comprising the safety device and to a method of a safety device.

### BACKGROUND OF THE INVENTION

Across Europe, the population is getting older and older. The number of people in need of care is increasing, but the working population is decreasing. As a result, the pressure on healthcare professionals is increasing. At the moment, there is already a shortage (gap) of 1 million WHO nurses in Europe. From simple techniques to complex service robots, there are good options to tackle the staffing problem. Care robots are a special branch of service robots, and they could play a role in closing the gap. But the environment with vulnerable people implies that these robots should be safe in their interaction with humans. Even if the robot's tasks are limited to logistical support (no direct patient interaction), a sufficient safety level is highly advantageous for any service robot.

US20170057095A1 describes a safety system for an industrial robot, specifically an industrial robot, and a method for implementing a safety system via predefined safety functions. To perform such safety functions the robot comprises in a joint connecting two robot arm sections a first position sensor (132) for sensing the angular orientation on an input side of a gear in the joint, and a second position sensor (133) for sensing an angular orientation on an output side of the gear.

US9043025B2 describes safe collaboration between a robot and humans achieved by operating the robot continuously at or below a first threshold speed at which any collisions with a person's arms do not cause harm, and, upon detection of the person's torso or head within a danger zone around the robot, reducing the speed to or below a second threshold at which any collisions with the person's torso or head do not cause harm.

US 11548153 describes a robot system and method for conditionally stopping a robot, wherein a maximum stopping time and/or distance are defined by a user or integrator through a user interface as safety limits based on the risk assessment. The method provides the continuous calculation of the time and/or distance, which the robot would need to stop under maximum motor torque and/or brake appliance. The robot is stopped or the speed of the robot is reduced, if the calculated time and/or distance exceeds the maximum limit values set by the user or integrator. The method may also be used to program or generate the trajectories of the robot as not to exceed the speed of the movement under the condition of keeping the set maximum stopping time and/or distance as defined by a use.

### SUMMARY OF THE INVENTION

Although the prior art safety systems may help to prevent accidents, there is a need for an increased safety level. Moreover, there would be a need for a way to impose safety guidelines on a service robot regardless of the design and implementation thereof.

According to an aspect of the invention, a compact safety device for a service robot is provided, the compact safety device comprising
a robot communication unit configured to communicate with at least one controller of the service robot;
an emergency stop unit configured to communicate with a power supply;
a control unit configured to:
   control the robot communication unit (76) to receive a set of parameters from at least one first component of the service robot;
   determine whether the set of parameters corresponds to a first safety condition of the service robot based on the set of parameters and a first set of predetermined safety criteria;
   if the set of parameters corresponds to the first safety condition, control the robot communication unit to send an instruction signal to at least one second component of the service robot to stop moving at least part of the service robot or to reduce the speed of the at least part of the service robot;
   determine whether the set of parameters corresponds to a second safety condition of the service robot based on the set of parameters and a second set of predetermined safety criteria; and
   if the set of parameters corresponds to the second safety condition, control the emergency stop unit to disconnect at least one actuator of the service robot from a power supply that provides power to said at least one actuator of the service robot,
   wherein the robot controller, the at least one first component of the service robot, the at least one second component of the service robot, and the at least one actuator are external to the compact safety device.

By integrating these safety control features in a compact safety device, the 'safety' aspect of the robot can be easily implemented. The compact safety device can be a universal device that can be incorporated into a range of different types of robots. This allows robot manufacturers to obtain the safety features as an OEM component. The compact safety device has its own control unit and can therefore be provided with a separate operating system that is proven to be reliable, such as a real-time operating system.

The compact safety device may comprise at least one sensor configured to generate a at least one sensor signal based on a stimulus. The control unit may be configured to receive the at least one sensor signal from the at least one sensor. The determining whether the set of parameters corresponds to the first safety condition of the service robot or the determining whether the set of parameters corresponds to the second safety condition of the service robot may be further based on the at least one sensor signal from the at least one sensor of the compact safety device. The ability to automatically disconnect power in imminent dangerous situations improves the security of the robot. The autonomous sensors improve the robustness of the robot safety system.

The at least one sensor may comprise an accelerometer and/or a geomagnetic field sensor and/or a proximity detector. Such sensors can be integrated into the compact safety device without needing an optical connection with the environment of the robot.

The safety device may comprise a frame, the control unit, the robot communication unit, the emergency stop unit and the optional at least one sensor being fixed to the frame, but the robot controller and the at least one first and second components of the service robot, and the power supply not being fixed to the frame. The compact safety device thus is a physically separate unit that can be easily installed in an robot or may even be replaced in case of malfunction. It is noted that the robot controller, the at least one first and second components of the service robot and the power supply may not be part of the compact safety device. In certain embodiments all the components of the compact safety device are fixed to the frame.

The frame may comprise a housing enclosing the control unit, the robot communication unit, the emergency stop unit, and optionally the optional at least one sensor, and wherein the robot controller, the at least part of the service robot, and the power supply are external to the housing. The housing ensures that engineers do not easily modify the components of the compact safety device. Also it makes the compact safety device more robust.

The compact safety device may further comprise a robot communication unit, such as a local area network interface, configured to transmit the request and the instruction and receive the set of parameters via a network connection. The compact safety device may thus be easily connected to the other electronic components of the robot. This allows the compact safety device to request and/or receive e.g. sensor data and/or status information of the robot. Also, safety status information and/or safety related commands can be sent to the other electronic components of the robot using the network interface. The network interface may be wired (e.g. a CAN bus interface) or a wireless connection.

The compact safety device may further comprise an emergency stop unit with a connection configured to control a relay to disconnect the at least part of the service robot from power. This allows the compact safety device to ensure that the robot is turned off in case the safety boundaries are exceeded.

The compact safety device may further comprise a remote communications unit, such as a wireless network interface, and wherein the control unit is configured to receive an instruction to shut down power via the network interface from a control station external to the service robot. The network interface may connect to devices external to the robot. This may be done via e.g. a local area network or a wide area network. Preferably the network interface connects to a wireless network.

According to another aspect of the invention, a service robot is provided, comprising: a compact safety device as set forth; at least one actuator configured to move at least part of the service robot; and a robot controller configured to control operation of the service robot including the at least one actuator, wherein the robot controller and the at least one actuator are external to the compact safety device. This allows the compact safety device to be incorporated as a separate OEM component in a robot design by robot manufacturers.

The compact safety device of the robot may be configured to autonomously monitor parameters of the service robot without accepting control signals from any entities within the service robot. The compact safety device may e.g. subscribe to receive certain sensor signals and/or status information of the control unit of the robot. Or, the compact safety device may include its own sensors. But the compact safety device would, preferably, not accept any command from within the robot to seize operations.

The compact safety device of the robot may also be configured to receive an instruction signal from a control station external to the service robot. This allows for example a remote operator (supervisor) to remotely switch off the service robot.

According to another aspect of the invention, a method of operating a compact safety device for a service robot is provided. The method may be performed by the compact safety device. The method comprises:
receiving, by a robot communication unit of the compact safety device, a set of parameters from at least one first component of the service robot;
determining, by a control unit of the compact safety device, whether the set of parameters corresponds to a first safety condition of the service robot based on the set of parameters and a first set of predetermined safety criteria;
sending, by the robot communication unit, if the set of parameters corresponds to the first safety condition, an instruction signal to at least one second component of the service robot to stop moving at least part of the service robot or to reduce the speed of the at least part of the service robot;
determining, by the control unit, whether the set of parameters corresponds to a second safety condition of the service robot based on the set of parameters and a second set of predetermined safety criteria; and
controlling, by an emergency stop unit of the compact safety device, if the set of parameters corresponds to the second safety condition, to disconnect at least one actuator of the service robot from a power supply that provides power to said at least one actuator of the service robot,
wherein the robot controller, the at least one first component of the service robot, the at least one second component of the service robot, and the at least one actuator are external to the compact safety device.

The person skilled in the art will understand that the features described above may be combined in any way deemed useful. Moreover, modifications and variations described in respect of the system may likewise be applied to the method and to the computer program product, and modifications and variations described in respect of the method may likewise be applied to the system and to the computer program product.

### BRIEF DESCRIPTION OF THE DRAWINGS

In the following, aspects of the invention will be elucidated by means of examples, with reference to the drawings. The drawings are diagrammatic and may not be drawn to scale. Throughout the drawings, similar items may be marked with the same reference numerals.
Fig. 1 illustrates a robot with a compact safety device providing a first level of safety features.
Fig. 2 illustrates a robot with a compact safety device providing a second level of safety features.
Fig. 3 illustrates a robot with a compact safety device providing a third level of safety features.
Fig. 4 shows a block diagram illustrating aspects of a first example of a compact robot safety device.
Fig. 5 shows a block diagram illustrating aspects of a second example of a compact robot safety device with built-in sensors.
Fig. 6 shows a block diagram illustrating aspects of a third example of a compact robot safety device with built-in remote control functionality.
Fig. 7 shows a block diagram illustrating aspects of the compact robot safety device in greater detail.
Fig. 8 shows a flowchart illustrating aspects of a method performed by a compact safety device.

### DETAILED DESCRIPTION OF EMBODIMENTS

Certain exemplary embodiments will be described in greater detail, with reference to the accompanying drawings.

The matters disclosed in the description, such as detailed construction and elements, are provided to assist in a comprehensive understanding of the exemplary embodiments. Accordingly, it is apparent that the exemplary embodiments can be carried out without those specifically defined matters. Also, well-known operations or structures are not described in detail, since they would obscure the description with unnecessary detail.

The field of service robots, as defined in e.g. ISO 8373:2012(en) "Robots and robotic devices - Vocabulary", encompasses robots that perform useful tasks for humans or equipment, outside the field of industrial automation applications. The compact safety device disclosed herein may advantageously be incorporated into such a service robot. For example, a compact safety device as described herein may be incorporated in a personal service robot for non-commercial tasks, which personal service robot may be typically operated by a lay person to perform tasks such as domestic servant tasks. Alternatively, the compact safety device may be incorporated in a professional service robot, to be used for a commercial task, usually operated by a properly trained operator. Such professional service robots may, for example, be configured to perform cleaning in public places or deliver goods in offices or hospitals. Certain service robots may be typically active in areas where (potentially vulnerable) people are residing, working, or relaxing. Thus, the compact safety device may ensure that the actions of the service robot do not cause any safety hazard to the people and/or the environment around the service robot.

Safety in service robots is still an underdeveloped area. The key lies in the controls. The world's most widely used environment for building robot controls is based on ROS (Robot Operating System); is a combination of a software framework, a communication standard and a community, in which open standards are used. However, the open and easily extensible nature of the ROS environment (based on publish - subscribe middleware) does not in itself guarantee that messages are processed in a sufficiently timely manner to prevent unsafe situations. In this set-up, without special measures, even an emergency stop command is not seen as a command with the highest priority, but as a request to stop, which can be ignored if necessary.

In order to obtain safety at a higher confidence level, a safety analysis carried out in accordance with NEN-EN-ISO 13482, supplemented by more specific follow-up research into failure behaviour by means of a Failure Modes and Effects Analysis (FMEA), showed that an independent safety module can guarantee the correct level of safety.

The compact Robot Safety Module (RSM) provides an independent guarantee that the robot can detect dangerous situations and ensures that the robot is slowed down, stopped, and brought to a safe condition in time when the signals from the sensors exceed predefined limits. These sensors may be any sensors of the robot or dedicated sensors of the RSM.

The RSM can have three levels of safety:
1. Guarantee of respect for safety margins
2. Additional safety margins in special situations
3. Redundant remote control.
Each of these levels will be elaborated by means of example, in the following.

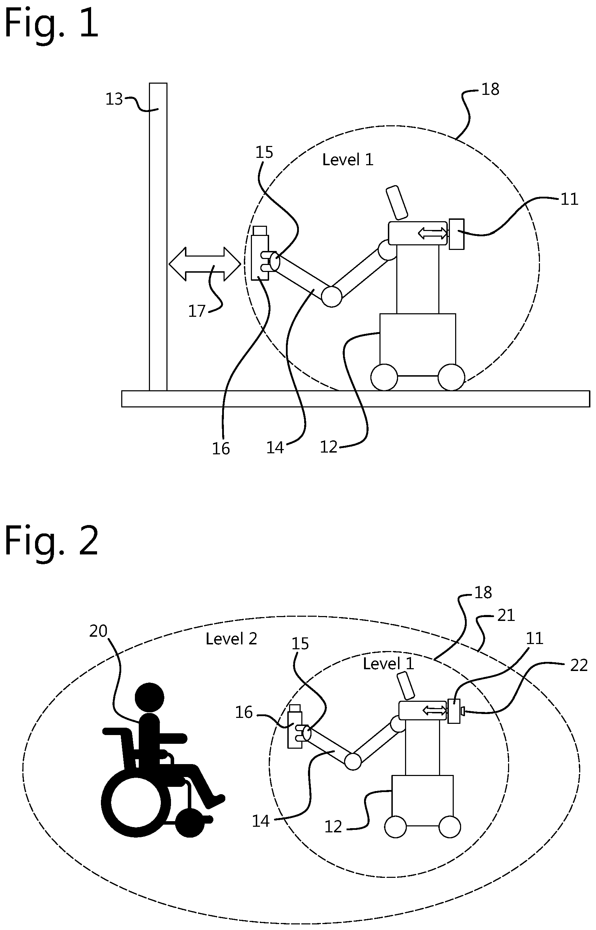

Fig. 1 illustrates an example of safety level 11. This involves respect for standard safety margins: A simple RSM, which is based on hard limits on the signal values of the existing sensors of the service robot and the existing actuators of the service robot. The RSM may be configured to receive these signal values, process them, and as an output guarantee that the speed is limited (in software, e.g. using the ROS) or else imposes an emergency stop (in hardware, hard wired). This limits the navigation of the service robot by avoiding collisions and/or avoiding the service robot to get trapped. The safety may also extend to any moving parts of the service robot, such as limbs. The RSM may limit arm movements to avoid tapping and/or pinching, for example. For example, as illustrated, the RSM 11 is built into the service robot 12. The RSM may apply safety margins on e.g. the distance of the robot 12 from an external object 13, such as a wall. Moreover, the RSM may apply safety margins on e.g. the distance of the robot arm 14, in particular the end effector 15 of the robot arm and/or any object 16 carried by the end effector 15, to the external object 13. In certain implementations, the RSM provides a safety distance 17 between an object 13 and a region 18 in which the service robot is active. For example the object 3 may be a fixed object in the building in which the service robot is active.

Fig. 2 illustrates an example of safety level 2. The RSM implementing safety level 2 is environmentally-aware. The RSM can e.g. detect whether a human 20 is nearby. Herein, "nearby" may for example be defined as within a certain well-defined zone 21 around the service robot 2.

It provides a smart RSM, which interprets the signals from the environment based on the sensors in the robot itself and also optional own set of sensors 22. For example, the RSM 1 may optionally use its own set of sensors 22 (e.g. an accelerometer and/or position sensor for an independent estimation of the speed and/or acceleration of the robot platform). Alternatively, a camera and/or a proximity sensor to detect objects may be incorporated in the RSM. It will be understood that such own sensors 22 may also be present in a level 1 security system.

The RSM may impose restrictions on a speed and/or on an applied force of the robot depending on the measured condition. The basic level 1 emergency stop is still there, but will be needed less often, because the RSM and the robot can anticipate objects / humans 20 in the zone 21. The RSM may also take into account any movement of the human 20 (or other object).

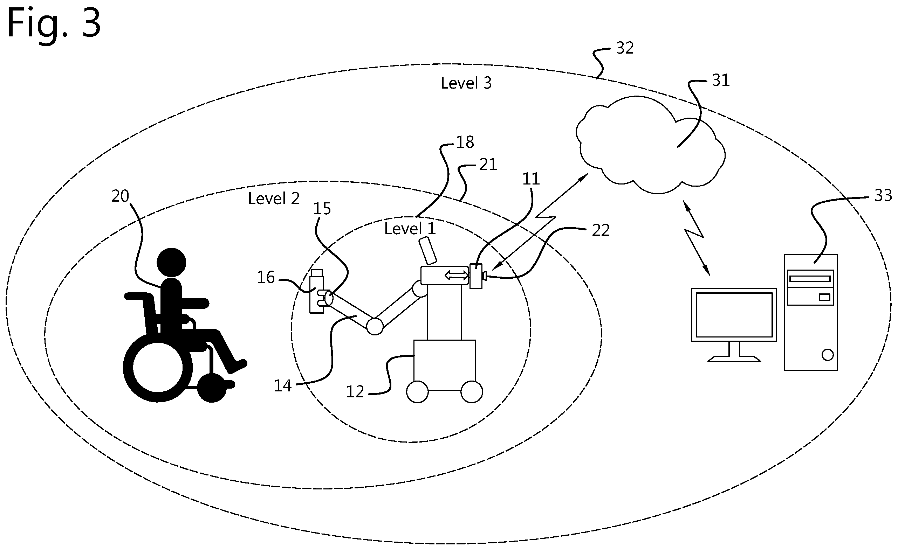

Fig. 3 illustrates an example of safety level 3. This level provides, in addition to the safety features of level 1 and/or level 2, integration with the Cloud 31, 32 or a local area network, connecting to a remote operator 33. An advanced, integrated RSM, which supports remote account control. The connection with the remote control system 33 may include redundant communication channels: for example both Wi-Fi and mobile network (e.g. 4G, 5G, LTE) connections. This may enable remote prediction of failure through complex safety analysis functions and trend analysis performed at a remote site by a remote computer system or by a remote human operator. The basic level 1 emergency stop is still there, but will be needed less often. And level 2 guarantees that even in the event of a loss of communication, the robot still reacts safely to events in the environment by applying the level 2 safety features.

The development of a separate, universally applicable, and separately certified safety module is expected to be more cost-efficient than the development and validation of the entire robot control system by each service robot supplier, for each individual robot design. The innovation provides a separate module that can be bought or sold separately and universally linked with which the provision of guarantees and enforcement of safety rules.

The need for safe robots extends into industry because new developments in industry increasingly see robots moving freely between people (from simple transport robots to advanced "mobile manipulators"). In addition, we see more and more cobots that are stationary but work directly with humans in their work area to perform physical tasks. These more industrial robots also need to communicate and collaborate directly with humans. Think, for example, of a robot in construction, which autonomously transports materials from a warehouse to the construction site that moves between people in the warehouse, in the hallway or on the construction site. The RSM may be used in these types of robots as well.

The compact Robot Safety Module (RSM) typically is a device consisting of a single board computer, running under a Hard Real Time Operating System (which guarantees the timely execution of specific software tasks). In addition, the RSM software module may be based on a validated deterministic mathematical model, which ensures that the software behaves predictably, reliably and robustly, and is free of deadlocks, livelocks and starvation.

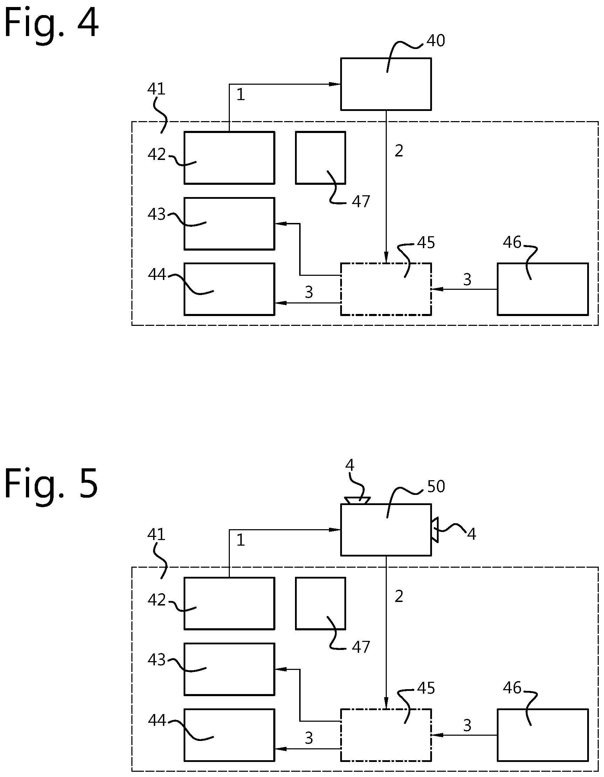

Fig. 4 shows an implementation of the RSM 40 that is characterized by a simple design. The service robot 41 comprises a robot base 44 (with optional wheels), a robot controller 42, a robot arm 43, a power supply 46, and a power switch 45. The service robot 41 may further comprise one or more sensors 47 in communication with the robot controller 42.

In operation, the RSM 40 queries the robot controller 42 via a connection 1 on a pre-defined list of critical parameters (e.g. current speed, distance to obstacle) and checks them one by one (or in combination) to assess whether preset limit values are exceeded. The connection 1 may be e.g. an ethernet connection or any suitable communication connection. The RSM 40 may also use a heartbeat protocol to periodically check whether the data coming from the robot controller 42 is still up-to-date (enough). This guarantees that hard limits on the signal values of the existing sensors and actuators of the service robot and output are respected and that the speed (driving of the base and movement of the arm) and the force (of the arm) are limited in time (in software) or that otherwise a timely emergency stop will follow. The emergency stop may be implemented by a connection 2 to a hardware switch 45, which can turn off the connection 3 of the essential components of the service robot to the power supply. In particular, the components that actuate movements of physical objects, such as the robot base 44 and the robot arm 43 may be disconnected from power in this way. Optionally, also the robot controller 42 is disconnected from power by the hardware switch 45 in case of an emergency stop.

Fig. 5 shows another implementation of an RSM 50. Compared to the RSM 40 of Fig. 4, the RSM 50 is different because it includes its own sensors 4 (in addition to any sensors 47 of the robot itself). The RSM 50 has all the features of RSM 40, but adds safety conditions based on the data generated by its own sensors 4. In certain implementations the sensors 4 of the RSM 50 are included in the housing of the compact RSM 50 (as illustrated). In certain alternative implementations, the RSM 50 may be connected to external sensors, connected by wire directly to the RSM 50 without going first through the robot controller 42 (not illustrated).

RSM 50 is characterized by the addition of one or more proprietary sensors 4 on the safety module, such as an accelerometer and/or a geomagnetic field sensor, which allow RSM 50 to independently check the parameters retrieved from robot controller 42 via e.g. the Ethernet connection 1. The pre-entered list of critical parameters (e.g. current speed, speed, distance to obstacle) is still checked for exceeding preset limit values. However, this is partly accompanied by independent verification based on its own sensors. The RSM 50 may also use a heartbeat protocol to check whether the data coming from the robot control is still up-to-date.

This configuration further guarantees that hard limits to the signal values of the existing sensors and actuators of the service robot and output are respected and that the speed (driving of the base and/or movement of the arm) and/or the force (exerted by e.g. the arm) are limited in time (in software) or that a timely emergency stop 2 will follow, where a hardware switch 3 switches off the connection 3 from the power supply 46 to the robot base 44 and robot arm 43.

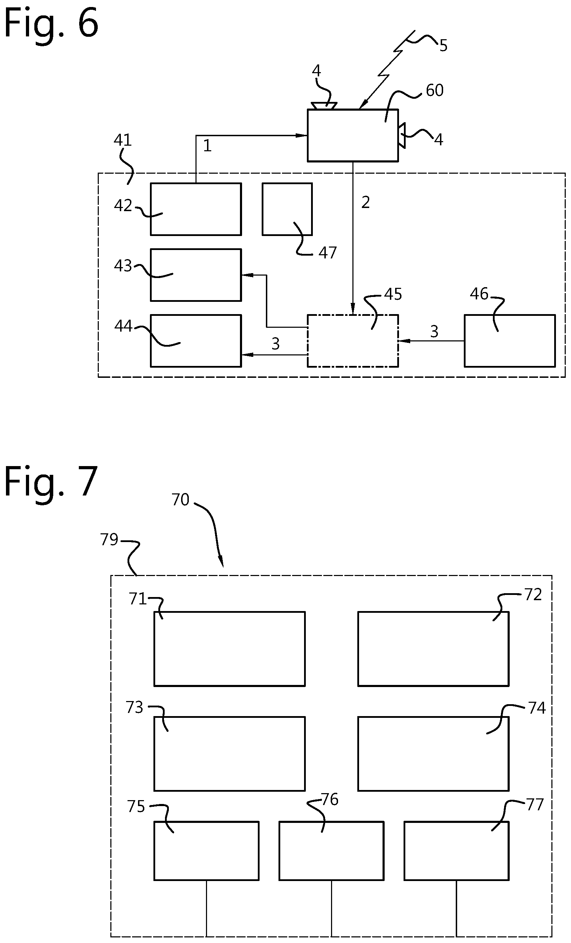

Fig. 6 shows another implementation of an RSM 60. Compared to the RSM 50 of Fig. 5, the RSM 60 is different because it further includes a network interface 5 to connect to a remote control unit (not shown) via a local area network or a wide area network. This allows certain checks and processing to be performed in the cloud or by a human operator located elsewhere. The RSM 60 contains all the features of the RSM 40. Optionally, the RSM 60 may also include the extra features of the RSM 50 (including the optional sensors 4).

RSM 60 is characterised by an additional network interface 5 to setup a network link which enables remote monitoring of parameters (e.g. imminent overheating) and predictive action by means of trend analysis. For example, a redundant communication connection can be implemented via Wi-Fi and 4G, LoRa, and/or 5G. The RSM 60 may also comprise a number of its own sensors 4, such as an accelerometer and a terrestrial magnetic field sensor, which allow the RSM to independently check the parameters that are retrieved from robot controller 42 by the remote control unit via the connection 1.

The pre-entered list of critical parameters (e.g. current speed, speed, distance to obstacle) is still checked for exceeding preset limit values. However, this is partly accompanied by independent verification. In addition, RSM may use a heartbeat protocol to check whether the data coming from the robot control is still up-to-date.

The support by the remote control unit may provide further guarantees that hard limits to the signal values of the existing sensors and actuators of the service robot and output are respected and that the speed (driving of the base and movement of the arm) and the force (of the arm) are limited in time (in software) or that a timely emergency stop 2 will follow, where a hardware switch 45 switches off the connection 3 from the power supply 46 to the robot base 44 and robot arm 43.

Fig. 7 shows a block diagram of an implementation of an RSM 70 in greater detail. The RSM 70 can be any of the above-described RSM's 40, 50, or 60, depending on the presence of the relevant optional components in the RSM.

The RSM 70 comprises a control unit 71, for example a computer processor. The RSM 70 further comprises a computer memory 72 connected to the control unit 71. The memory 72 may store a computer program with instructions to cause the control unit 71 to perform the functions disclosed herein. The memory 72 may further be used to store status information of the robot. The memory 72 may comprise read only memory, random access memory, firmware, or any combination thereof.

The RSM 70 further comprises a power unit 75. The power unit 75 may comprise a connector to connect to an external power supply. The power unit 75 may further comprise a backup battery to provide power to the components of the RSM in case of power failure.

The RSM further comprises a robot communication unit 76 with a communication interface, such as an ethernet interface, to connect to components of the robot to collect sensor data and status information of the robot, and to transmit safety commands, such as limitations on speed and/or exerted force, or stop commands. The robot communication unit 76 can be implemented by a wired communication interface or a wireless communication interface.

The RSM may further comprise an emergency stop unit 77, with a connector to connect to a relay that can switch off power from the actuators of the robot. The emergency stop unit 77 operates under control of the control unit 71.

The RSM may further comprise one or more sensors 73, such as an accelerometer, a gyroscope, a proximity sensor, a positioning system such as global positioning system (GPS). The output of the sensors is fed to the control unit 71, which processes the information and compares the sensor data to safety criteria.

The RSM may further comprise a remote communications unit 74, with a network interface, such as a wireless connection interface, to connect to a remote control device, such as a remote computer system. The network interface may be a Wi-Fi interface, a mobile network interface (such as 4G, 5G, LTE), Bluetooth interface or any other wireless interface. The remote communications unit 74 may have two or more network interfaces of the same type or different types, to provide redundant communication channels to the remote control device in case of failure of one network. The control unit 71 may send status information of the robot and sensor signals received from the robot and from the sensors 73 to the remote control device via the remote communications unit 74, and receive commands from the remote control device via the remote communications unit 74. The control unit 71 may forward these received commands to the robot via the communications unit 76. If the control unit 71 receives a command via the remote communications unit 74 to emergency stop the robot, the control unit 71 controls the emergency stop unit 77 to disconnect the power.

The RSM may be a compact safety device, having a robust housing enclosing the components 71-77, with openings for the connectors of the components 75-77. The housing may also have fixation means, such as screw holes, to fix the RSM at its place in the robot.

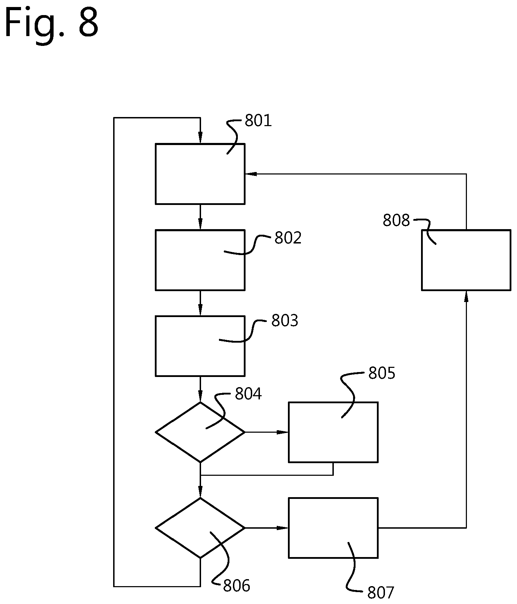

Fig. 8 shows a flowchart illustrating example method of operating the compact safety device. The method may be performed by the compact safety device, under control of the control unit 71.

In step 801, the robot communication unit 76 of the compact safety device receives a set of parameters from at least one first component 42, 43, 44, 47 of the service robot 41.

In step 802, the robot communication unit 76 may receive a signal from one or more optional sensors 70 of the compact safety device.

In step 803, the optional remote communications unit 74 of the compact safety device may receive an instruction from a control station external to the service robot. This may be, for example, an instruction to shut down power. Alternatively, the instruction may be an instruction to restrict operation to a particular area or to limit speed and/or limit any exerted forces.

In step 804, the control unit 71 of the compact safety device determines whether the set of parameters (which may include any sensor signals of step 802 or external commands of step 803) corresponds to a first safety condition of the service robot 41 based on the set of parameters and a first set of predetermined safety criteria.

If the set of parameters corresponds to the first safety condition, the robot communication unit 76 sends in step 805 an instruction signal to at least one second component 42, 43, 44 of the service robot 41 to stop moving at least part of the service robot or to reduce the speed of the at least part of the service robot.

In certain embodiments, the instruction to stop moving or reduce the speed may be released as soon as the set of parameters no longer corresponds to the first safety condition. This instruction may be released by an instruction signal sent by the compact safety device, or by any of the other components of the robot if these components have determined that it is safe to proceed.

In step 806 the control unit determines whether the set of parameters corresponds to a second safety condition of the service robot 41 based on the set of parameters and a second set of predetermined safety criteria.

If the set of parameters corresponds to the second safety condition, an emergency stop unit 77 of the compact safety device disconnects, in step 807, at least one actuator 43, 44 of the service robot 41 from a power supply 46 that provides power to said at least one actuator 43, 44 of the service robot 41.

In step 808, the power supply 46 is reconnected to the actuator 43, 44. This step may be performed by a dedicated switch that may be operated by a user after the safety issue has been overcome, for example. Alternatively, the compact safety device may continue to check safety parameters after disconnecting the power in step 807, and when it has detected that the safety conditions are met, the compact safety device may control e.g. a relay to connect the power again.

Throughout the method, the robot controller 42, the at least one first component 42, 43, 44, 47 of the service robot 41, the at least one second component 42, 43, 44 of the service robot 41, and the at least one actuator 43, 44 are external to the compact safety device.

The method may be implemented in part or completely in software to be executed by the control unit 71.

A safety module may provide an independent guarantee of safe behaviour of a robot. The safety module may guarantee by means of a heartbeat protocol that the data on which the safety decision is based does not work with outdated data. The software of the security module may be mathematically validated deterministic software. The safety module may also perform an independent check for critical parameters on the basis of its own sensors. The safety module may also maintain a connection that allows parameter values to be monitored remotely.

Some or all aspects of the invention may be suitable for being implemented in form of software, in particular a computer program product. The computer program product may comprise a computer program stored on a non-transitory computer-readable media. Also, the computer program may be represented by a signal, such as an optic signal or an electro-magnetic signal, carried by a transmission medium such as an optic fiber cable or the air. The computer program may partly or entirely have the form of source code, object code, or pseudo code, suitable for being executed by a computer system. For example, the code may be executable by one or more processors.

The examples and embodiments described herein serve to illustrate rather than limit the invention. The person skilled in the art will be able to design alternative embodiments without departing from the spirit and scope of the present disclosure, as defined by the appended claims and their equivalents. Reference signs placed in parentheses in the claims shall not be interpreted to limit the scope of the claims. Items described as separate entities in the claims or the description may be implemented as a single hardware or software item combining the features of the items described.

## Claims

1. A compact safety device for a service robot, the safety device comprising
a robot communication unit (76) configured to communicate with at least one controller of the service robot (41);
an emergency stop unit (77) configured to communicate with a power supply (45, 46); and
a control unit (71) configured to:
control the robot communication unit (76) to receive a set of parameters from at least one first component (42, 43, 44, 47) of the service robot (41);
determine whether the set of parameters corresponds to a first safety condition of the service robot (41) based on the set of parameters and a first set of predetermined safety criteria;
if the set of parameters corresponds to the first safety condition, control the robot communication unit (76) to send an instruction signal to at least one second component (42, 43, 44) of the service robot (41) to stop moving at least part of the service robot or to reduce the speed of the at least part of the service robot;
determine whether the set of parameters corresponds to a second safety condition of the service robot (41) based on the set of parameters and a second set of predetermined safety criteria; and
if the set of parameters corresponds to the second safety condition, control the emergency stop unit (77) to disconnect at least one actuator (43, 44) of the service robot (41) from a power supply (46) that provides power to said at least one actuator (43, 44) of the service robot (41),
wherein the robot controller (42), the at least one first component (42, 43, 44, 47) of the service robot (41), the at least one second component (42, 43, 44) of the service robot (41), and the at least one actuator (43, 44) are external to the compact safety device.

2. The compact safety device of claim 1, further comprising at least one sensor (63) configured to generate a at least one sensor signal based on a stimulus, and
wherein the control unit (61) is configured to receive the at least one sensor signal from the at least one sensor (63), and
wherein the determining whether the set of parameters corresponds to the first safety condition of the service robot (41) or the determining whether the set of parameters corresponds to the second safety condition of the service robot (41) is further based on the at least one sensor signal from the at least one sensor (63) of the compact safety device.

3. The compact safety device of claim 2, wherein the at least one sensor (63) of the compact safety device comprises an accelerometer and/or a geomagnetic field sensor and/or a proximity detector.

4. The compact safety device of any preceding claim,
wherein the compact safety device further comprises a frame,
wherein the control unit (71), the robot communication unit (76), and the emergency stop unit (77) are fixed to the frame, but the robot controller, the at least one first component of the service robot, the at least one second component of the service robot, and the power supply are not fixed to the frame.

5. The compact safety device of claim 4, wherein at least one sensor (63) of the compact safety device is fixed to the frame.

6. The compact safety device of claim 4 or 5, comprising a housing (79) enclosing the control unit (71), the robot communication unit (76), and the emergency stop unit (77), and optionally the at least one sensor (63), and wherein the robot controller, the at least part of the service robot, and the power supply are external to the housing (79).

7. The compact safety device of any preceding claim, further comprising a robot communication unit (76) configured to receive the set of parameters and transmit the instruction via a network connection.

8. The compact safety device of any preceding claim, wherein the emergency stop unit (77) is configured to control a relay (45) of the power supply (46) to disconnect the at least part of the service robot from power.

9. The compact safety device of any preceding claim, further comprising a remote communications unit (74) and wherein the control unit (71) is configured to receive, via the remote communications unit (74), an instruction to shut down power from a control station external to the service robot.

10. A service robot comprising:
a compact safety device according to any preceding claim;
at least one actuator (43, 44) configured to move at least part of the service robot; and
a robot controller (42) configured to control at least the at least one actuator,
wherein the robot controller (42) and the at least one actuator (43, 44) are external to the compact safety device (40).

11. The service robot of claim 10, wherein the compact safety device is configured to autonomously monitor parameters of the service robot without accepting control signals from any entities within the service robot.

12. The service robot of any one of claims 10-11, wherein the compact safety device (40) is configured to receive an instruction signal from a control station external to the service robot.

13. A method by a compact safety device for a service robot, the method comprising
receiving (801), by a robot communication unit (76) of the compact safety device, a set of parameters from at least one first component (42, 43, 44, 47) of the service robot (41);
determining (804), by a control unit of the compact safety device, whether the set of parameters corresponds to a first safety condition of the service robot (41) based on the set of parameters and a first set of predetermined safety criteria;
sending (805), by the robot communication unit (76), if the set of parameters corresponds to the first safety condition, an instruction signal to at least one second component (42, 43, 44) of the service robot (41) to stop moving at least part of the service robot or to reduce the speed of the at least part of the service robot;
determining (806), by the control unit, whether the set of parameters corresponds to a second safety condition of the service robot (41) based on the set of parameters and a second set of predetermined safety criteria; and
controlling (807), by an emergency stop unit (77) of the compact safety device, if the set of parameters corresponds to the second safety condition, to disconnect at least one actuator (43, 44) of the service robot (41) from a power supply (46) that provides power to said at least one actuator (43, 44) of the service robot (41),
wherein the robot controller (42), the at least one first component (42, 43, 44, 47) of the service robot (41), the at least one second component (42, 43, 44) of the service robot (41), and the at least one actuator (43, 44) are external to the compact safety device.
